# EUROPEAN PATENT APPLICATION

(11) **EP 3 621 260 A1**
(43) Date of publication of application: **11.03.2020**
(21) Application number: 17908632.7
(22) Date of filing: 02.05.2017
(51) Int. Cl.: H04L 27/26

(54) **USER TERMINAL, AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2017/017296
(87) International publication number: WO 2018/203397

(57) **Abstract**

The present invention is designed so that, when the CP-OFDM waveform is supported in the UL in addition to the DFT-spread OFDM waveform, UL transmission can still be controlled adequately. According to the present invention, a user terminal has a transmission section that transmit an uplink shared channel (PUSCH), and a control section that controls, based on the waveform that is used for an uplink shared channel scheduled by downlink control information scrambled by a first indicator, the waveform to use for an uplink shared channel that is scheduled by downlink control information scrambled by a second indicator.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower delays and so on (see non-patent literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

The uplink (UL) in existing LTE systems (for example, LTE Rel. 8 to 13) supports DFT-spread OFDM (DFT-S-OFDM (Discrete Fourier Transform-Spread-Orthogonal Frequency Division Multiplexing)) waveform. The DFT-spread OFDM waveform is a single-carrier waveform, so that it is possible to prevent the peak-to-average power ratio (PAPR)) from increasing.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Envisaging the UL of future radio communication systems (for example, LTE 5G, NR, etc.), research is underway to support the cyclic prefix-OFDM (CP-OFDM (Cyclic Prefix-Orthogonal Frequency Division Multiplexing)) waveform, which is a multi-carrier waveform, in addition to DFT-spread OFDM waveform, which is a single-carrier waveform. Note that DFT-spread OFDM waveform can be regarded as a UL signal, to which DFT spreading (also referred as to "DFT precoding" and the like) is applied, and the like (the phrase "with DFT spreading" may be used hereinafter to mean the same), and the CP-OFDM waveform can be regarded as a UL signal to which DFT spreading is not applied, and the like (the phrase "without DFT spreading" may be used hereinafter to mean the same).

Envisaging future radio communication systems where both of these DFT-spread OFDM waveform and CP-OFDM waveform may be supported, how to control these waveforms in UL transmission requires further research.

The present invention has been made in view of the above, and it is therefore an object of the present invention to provide a user terminal and a radio communication method, whereby, when the CP-OFDM waveform is supported in the UL, in addition to DFT-spread OFDM waveform, UL transmission can still be controlled adequately.

### Solution to Problem

According to one aspect of the present invention, a user terminal has a transmission section that transmit an uplink shared channel (PUSCH), and a control section that controls, based on the waveform that is used for an uplink shared channel scheduled by downlink control information scrambled by a first indicator, the waveform to use for an uplink shared channel that is scheduled by downlink control information scrambled by a second indicator.

### Advantageous Effects of Invention

According to the present invention, when the CP-OFDM waveform is supported in the UL, in addition to DFT-spread OFDM waveform, user terminals can still control UL transmission adequately.

### Brief Description of Drawings

FIGs. 1A and 1B are diagrams, each illustrating an example of a PUSCH transmitter in future radio communication systems;
FIG. 2 is a diagram to illustrate an example of contention-based random access;
FIGs. 3A and 3B are diagrams to explain different ways of resource allocation, according to a first example of the present embodiment;
FIG. 4 is a diagram to explain PUSCH waveform control, according to a second example of the present embodiment;
FIG. 5 is a diagram to explain the link between types of resource allocation and PUSCH waveforms, according to a third example of the present embodiment;
FIG. 6 is a diagram to explain PUSCH waveform control based on scheduling in the time direction, according to a variation of the present embodiment;
FIG. 7 is a diagram to illustrate an exemplary schematic structure of a radio communication system according to the present embodiment;
FIG. 8 is a diagram to illustrate an exemplary overall structure of a radio base station according to the present embodiment;
FIG. 9 is a diagram to illustrate an exemplary functional structure of a radio base station according to the present embodiment;
FIG. 10 is a diagram to illustrate an exemplary overall structure of a user terminal according to the present embodiment;
FIG. 11 is a diagram to illustrate an exemplary functional structure of a user terminal according to the present embodiment; and
FIG. 12 is a diagram to illustrate an exemplary hardware structure of a radio base station and a user terminal according to the present embodiment.

### Description of Embodiments

Envisaging the UL of future radio communication systems (for example, LTE 5G, NR, etc.), research is underway to support the cyclic prefix OFDM (CP-OFDM) waveform, which is a multi-carrier waveform (and which is a UL signal, to which DFT spreading (also referred to as "DFT precoding" and the like) is not applied (or "without DFT spreading")), in addition to the DFT-spread OFDM waveform, which is a single-carrier waveform (and which is a UL signal, to which DFT spreading is applied (or "with DFT spreading")).

Whether or not DFT spreading is applied to (which one of DFT-spread OFDM waveform and the CP-OFDM waveform is used for) the PUSCH might be configured in or indicated to a user terminal by using the network (for example, a radio base station).

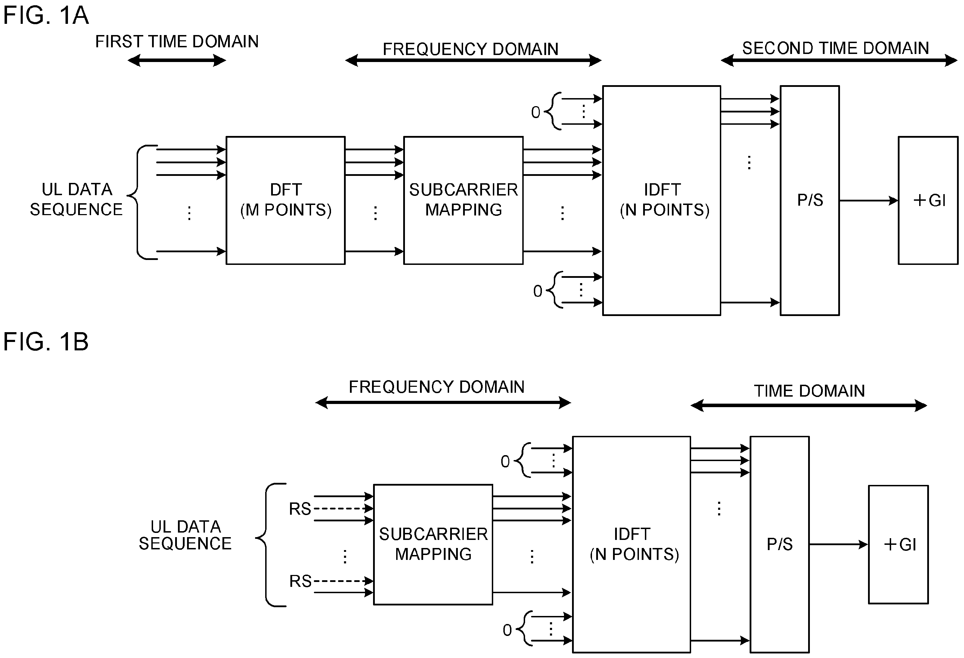

FIGs. 1 are diagrams, each illustrating an example of a PUSCH transmitter in future radio communication systems. FIG. 1A illustrates an example of a transmitter using the DFT-spread OFDM waveform. As illustrated in FIG. 1A, UL data sequences after coding and modulation are subjected to a discrete Fourier transform (DFT) (or a fast Fourier transform (FFT)) of M points, converted from a first time domain to the frequency domain. Outputs of the DFT are mapped to M subcarriers, subjected to an inverse discrete Fourier transform (IDFT) (or an inverse fast Fourier transform (IFFT)) of N points, and converted from the frequency domain to a second time domain.

Here, N>M holds, and information that is input to the IDFT (or the IFFT) but not used is configured to zero. By this means, IDFT outputs give signals with little instantaneous power fluctuation, and their bandwidth depends on M. IDFT outputs are subjected to a parallel/serial (P/S) conversion, and then guard intervals (GIs) (also referred to as "cyclic prefixes (CPs)" and the like) are attached. In this way, signals that have characteristics of single-carrier communication are generated by DFT-spread OFDM transmitter, and transmitted in one symbol.

FIG. 1B illustrates an example of a transmitter using the CP-OFDM waveform. As illustrated in FIG. 1B, UL data sequences and/or reference signals (RSs), which have been encoded and modulated, are mapped to a number of subcarriers equal to the transmission bandwidth, and subjected to an IDFT (or an IFFT). Information that is input to the IDFT but not used is configured to zero. IDFT outputs are subject to a P/S conversion, and GIs are inserted. In this way, since the CP-OFDM transmitter uses multiple carriers, it is possible to frequency-division-multiplex RSs and UL data sequences.

Meanwhile, in random access operation, which is for allowing a user terminal to gain initial access, establish synchronization or resume communication, which waveform is to be applied to the transmission of the PUSCH is under study.

To be more specific, studies are in progress to configure or indicate the waveform for the PUSCH, which a user terminal transmits to the network in random access operation and which is generally referred to "message 3," in system information (SI) that is reported from the network to the user terminal.

Now, an overview of random access will be explained. Existing LTE systems (for example, LTE Rel. 8 to 13) support random access procedures for establishing UL synchronization. Random access procedures include contention-based random access (also referred to as "CBRA" and so on) and non-contention-based random access (also referred to as "non-CBRA," "contention-free random access (CFRA)," and so on).

In contention-based random access (CBRA), a user terminal transmits a preamble, which is selected randomly from a plurality of preambles provided for each cell (also referred to as "random access preambles," "random access channels (PRACHs)," "RACH preambles" and so on). Furthermore, contention-based random access is user terminal-initiated random access procedures, and can be used, for example, when gaining initial access, when starting or resuming UL transmission, and so on.

On the other hand, in non-contention-based random access (non-CBRA, CFRA, etc.), a radio base station assigns preambles in a user terminal-specific manner, by using downlink (DL) control channels (PDCCH (Physical Downlink Control CHannel), EPDCCH (Enhanced PDCCH) and so on), and the user terminals transmit the preambles assigned by the radio base station. Non-contention-based random access is network-initiated random access procedures, and can be used, for example, when conducting handover, when starting or resuming DL transmission, and so on (when transmission of DL retransmission control information is started or resumed in the UL).

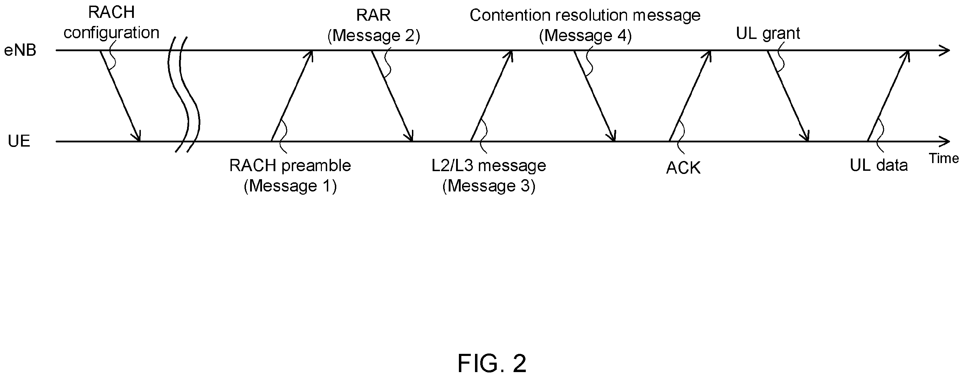

FIG. 2 is a diagram to illustrate an example of contention-based random access. In FIG. 2, a user terminal receives, in advance, information (PRACH configuration information) that indicates the configuration of a random access channel (PRACH) (PRACH configuration, RACH configuration, etc.), via system information (for example, the MIB (Mater Information Block) and/or SIBs (System Information Blocks)), higher layer signaling (for example, RRC (Radio Resource Control) signaling) and so on.

This PRACH configuration information can indicate, for example, a plurality of preambles (for example, preamble formats) that are defined in each cell, the time resources that are used in PRACH transmission (including, for example, a system frame index, a subframe index and so on) and the offset (prach-FrequencyOffset) to indicate the starting position of frequency resources (for example, six resource blocks (PRBs (Physical Resource Blocks))).

As illustrated in FIG. 2, when a user terminal transitions from idle mode (RRC_IDLE) to RRC-connected mode (RRC_CONNECTED) (for example, when gaining initial access), if UL synchronization is not established despite the fact that the user terminal is in RRC-connected mode (for example, when UL transmission is started or resumed), the user terminal can randomly select one of a plurality of preambles that are indicated in the PRACH configuration information, and transmit the selected preamble using the PRACH (message 1).

Upon detecting the preamble, the radio base station transmits a random access response (RAR) in response to that (message 2). If the user terminal fails to receive a RAR within a predetermined period (RAR window) after the preamble is transmitted, the user terminal increases the transmission power of the PRACH and transmits the preamble again (retransmission). Note that the act of increasing transmission power upon retransmission is also referred to as "power ramping."

Upon receiving the RAR, the user terminal adjusts the transmission timing in the UL based on the timing advance (TA) that is contained in the RAR, and establishes UL synchronization. Furthermore, the user terminal transmits a higher layer (L2/L3 (layer 2/layer 3)) control message (message 3) in the UL resource specified by the UL grant contained in the RAR. This control message contains the user terminal's identifier (UE-ID). The user terminal's identifier may be, for example, a C-RNTI (Cell-Radio Network Temporary Identifier) in the event the user terminal is in RRC-connected mode, or may be a higher layer UE-ID such as an S-TMSI (System Architecture Evolution-Temporary Mobile Subscriber Identity) in the event the user terminal is in idle mode.

In response to the higher layer control message, the radio base station sends a contention-resolution message (message 4). The contention-resolution message is transmitted based on the above-mentioned user terminal identifier included in the control message. Upon successfully detecting the contention-resolution message, the user terminal transmits an HARQ (Hybrid Automatic Repeat reQuest)-based positive acknowledgment (ACK) to the radio base station. By this means, the user terminal in idle mode transitions to RRC-connected mode.

On the other hand, if the user terminal fails to detect the contention-resolution message, the user terminal determines that contention has occurred, reselects a preamble, and repeats the random access procedures from message 1 to message 4.

When learning from an ACK from the user terminal that contention has been resolved, the radio base station transmits a UL grant to the user terminal. The user terminal starts transmitting UL data by using the UL resource allocated by the UL grant.

According to the above-described contention-based random access, when the user terminal desires to transmit UL data, the user terminal can start random access procedures autonomously. Also, since UL synchronization is established first and then UL data is transmitted by using UL resources that are allocated on a per user terminal basis by UL grants, reliable UL transmission is made possible.

Regarding the above-described random access procedures, research is underway to allow the waveform for the PUSCH that is transmitted first from a user terminal (PUSCH waveform for message 3) to be configured in or indicated to the user terminal by means of system information (MIB and/or SIB).

Nevertheless, no study has been done on what waveform is applied to PUSCH transmission after a connection is established between the system and the user terminal (after random access procedures are complete).

For example, DFT-spread OFDM waveform or the CP-OFDM waveform that is configured or indicated based on system information may be change to another waveform depending on the user terminal's capabilities, the volume of traffic in the network (communicating environment) and/or the content of information that is transmitted.

However, what kind of waveform is applied to PUSCH transmission after a connection is established (after random access procedures are complete) between the system and the user terminal has not been studied, and so there is a possibility that the PUSCH cannot be transmitted in an appropriate waveform.

Consequently, the present inventors have studied how to control the waveforms to apply to PUSCH transmission when the CP-OFDM waveform is supported in the UL, in addition to DFT-spread OFDM waveform, and arrived at the present invention. To be more specific, the present inventors have come up with the idea of controlling the waveform for PUSCHs that are transmitted after message 3, based on the waveform that is used to transmit message 3, and arrived at the present invention.

Also, the present inventors have come up with the idea of associating the type of resource allocation (resource allocation type) and/or downlink control information (DCI) with the waveform to apply to the PUSCH, and arrived at the present invention.

Now, the present embodiment will be described below. Hereinafter, the CP-OFDM waveform will be explained as an example of a multi-carrier waveform and DFT-spread OFDM waveform will be explained as an example of a single-carrier waveform, but the present embodiment can be appropriately applied to other multi-carrier waveforms than the CP-OFDM waveform, and to other single-carrier waveforms than DFT-spread OFDM waveform. In addition, a single-carrier waveform may be interpreted as meaning a waveform to which DFT spreading is applied, and a multi-carrier waveform may be interpreted as meaning a waveform to which DFT spreading is not applied.

In the waveform control according to the present embodiment, the PUSCH waveform is selected based on higher layer signaling and/or physical layer signaling. Here, referring back to the random access procedures described above, the case where CP-OFDM is configured or indicated for the PUSCH transmission of message 3 and the case where DFT-spread OFDM is configured or indicated, will be described below separately.

### (When the CP-OFDM waveform is applied to message 3)

When the CP-OFDM waveform is applied to the PUSCH transmission corresponding to message 3 based on system information (for example, SIB), a user terminal does not use DFT-spread OFDM waveform for PUSCHs that are transmitted after message 3. That is, the user terminal transmits PUSCHs by using the CP-OFDM waveform.

By this means, even after message 3 is transmitted, PUSCH transmission in the CP-OFDM waveform is maintained. When the CP-OFDM waveform is applied, multiple carriers are used, so that, for example, it is possible to frequency-division-multiplex RSs and UL data sequences. Consequently, in PUSCH transmission, frequency division multiplexing of RSs and UL data sequences can be maintained. Furthermore, when CP-OFDM waveform is selected for message 3, the structure and arrangement of cells, as well as the deployment of devices, are likely to be designed to ensure sufficient coverage for CP-OFDM. In this case, by eliminating control that leads to DFT-spread OFDM waveform, it is possible to prevent the higher layer or physical layer signaling overhead from increasing, prevent control from further complication, and so on.

### (When DFT-spread OFDM waveform is applied to message 3)

When the CP-OFDM waveform is applied to the PUSCH transmission corresponding to message 3 based on system information (for example, SIB), for PUSCHs that are transmitted after message 3, a user terminal transmits the PUSCH in DFT-spread OFDM waveform when a predetermined condition (condition A) is fulfilled, or transmits the PUSCH in the CP-OFDM waveform when condition A is not fulfilled (or when another condition (condition B) is fulfilled). Note that conditions A and B will be explained later with the first example to the third example, which will be described below.

For example, when condition A is fulfilled, PUSCH transmission in DFT-spread OFDM waveform is maintained. In other words, DFT-spread OFDM waveform, which is for gaining initial access or establishing synchronization, and which can be used even in a state the quality (capability) of the user terminal is not known, is applied to PUSCHs that are transmitted afterwards, on an as-is basis. Consequently, it is possible to communicate in a wide coverage, and maintain communication between the user terminal and the network in a reliable manner.

Meanwhile, when condition A is not fulfilled (or when another condition (condition B) is fulfilled), transmission in DFT-spread OFDM waveform is switched to transmission in the CP-OFDM waveform. That is, PUSCH transmission can be switched from single-carrier transmission to multi-carrier transmission. For example, in dynamic TDD, in which there is a possibility that UL data and DL data collide between adjacent cells or adjacent stations, the locations of reference signals can be aligned by using the same waveform in the DL and the UL, so that inter-cell interference can be controlled easily. Alternatively, it is possible to control CP-OFDM, which facilitates highly efficient channel design, and DFT-waveform OFDM, which is capable of providing wide coverage, depending on the user's communicating environment, error rate, whether it is initial transmission or re-transmission that is performed, and other factors. In addition, when the CP-OFDM waveform is applied to PUCCH transmission for the purpose of achieving high payload, the CP-OFDM waveform then can be applied to PUSCH transmission as well, so that it is possible to prevent an imbalance in coverage.

Above condition A and other conditions may be configured per transmission level (for example, per data scheduled by downlink control information (DCI) (per transport block (TB), codeword (CW), code block (CB), code block group (CBG), etc.)). This allows dynamic switching of waveforms. Consequently, after DFT-spread OFDM waveform is switched to the CP-OFDM waveform once, it is still possible to resume the use of DFT-spread OFDM waveform later.

According to the above-described embodiment, waveforms after message 3 is transmitted are controlled based on the waveform that is applied to the PUSCH transmission corresponding to message 3. By this means, it is possible to continue using the CP-OFDM waveform, and maintain the frequency division multiplexing of RSs and UL data sequences. Furthermore, it is possible to continue using the DFT-spread OFDM waveform, and maintain communication between user terminals and the network, in a reliable manner.

Furthermore, based on condition A (and/or condition B) that is configured, it is possible to switch the waveform to apply to PUSCH transmission. Consequently, when, for example, the CP-OFDM waveform is applied to PUCCH transmission for the purpose of achieving high payload, it is possible to control the waveforms to apply to PUSCH transmission based on the communicating environment and/or desired conditions of communication.

As described above, when the CP-OFDM waveform is supported in the UL, in addition to DFT-spread OFDM waveform, user terminals can still control UL transmission adequately.

Note that DCI which user terminals receive after random access procedures are completed is scrambled (masked) by UE-specific indicators (for example, C-RNTIs (Cell-Radio Network Temporary Identifiers)). Signals that are transmitted from the network to user terminals before random access procedures are completed are scrambled by temporarily assigned indicators (for example, temporary C-RNTIs (TC-RNTIs (Temporary Cell-Radio Network Temporary Identifiers), random access-RNTIs (RA-RNTIs), etc.).

Consequently, it is possible to say that the indicators for use for scrambling (masking) differ between downlink control information that configures or indicates the waveform to be used for the PUSCH of message 3, and downlink control information that configures or indicates the waveforms to be used for PUSCHs after message 3.

Note that, according to the above embodiment, if the CP-OFDM waveform is applied to message 3, PUSCHs that are transmitted after message 3 maintain the CP-OFDM waveform. However, this is by no means limiting, and, for example, if a predetermined condition is fulfilled, the PUSCH waveform may be switched from the CP-OFDM waveform to another waveform -- for example, to DFT-spread OFDM waveform.

Also, if DFT-spread OFDM waveform is applied to message 3, PUSCHs that are transmitted after message 3 may maintain DFT-spread OFDM waveform.

Next, condition A in the above-described embodiments will be described with reference to specific examples.

### (First Example)

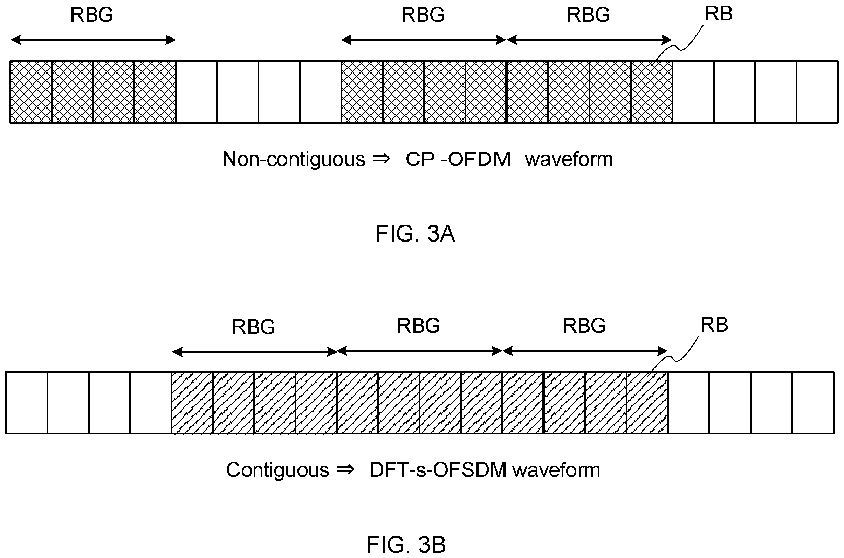

Now, a first example will be described below. The PUSCH resource allocation according to the first example is DL RA type 0 (Downlink Resource Allocation Type 0) that is supported in LTE, and condition A indicates allocation of contiguous resources. To be more specific, condition A is fulfilled when PUSCH resources are allocated using contiguous RBGs (resource block groups) (FIG. 3B).

Normally, when using DL RA type 0, resources are allocated based on a bitmap, per resource block group. Also, the use of DL RA type 0 is configured or indicated by higher layer signaling (SIB or RRC signaling). The number of resource blocks that constitute a resource block group, the maximum number of resource block groups that can be used in data scheduling, and the frequency locations for determining the 0-th resource block group may be configured by higher layer signaling that is common between users or that is user-specific.

When system information (SIB) reports DFT-spread OFDM for the PUSCH waveform for message 3, a user terminal transmits message 3 by using the DFT-spread OFDM waveform. If, after this, it is reported via higher layer signaling that DL RA type 0 is to be applied to the resource allocation, the user terminal checks the resource allocation field in DCI.

When the resource allocation field contained in DCI schedules contiguous RBGs only, the user terminal transmits the PUSCH by using the DFT-spread OFDM waveform. If the allocation of PUSCH resources does not schedule contiguous RBGs alone (as in the discrete scheduling of FIG. 3A), the user terminal transmits the PUSCH by using the CP-OFDM waveform. By this means, the waveform to apply to PUSCH transmission can be switched based on the resource allocation field contained in DCI.

As described above, according to the first example, the transmitting waveform for the PUSCH is determined by the resource allocation field provided in DCI. For condition A, the resource allocation field in DCI can be used. Consequently, the waveform to apply to PUSCH transmission can be controlled on a dynamic basis. In addition, there is no need to provide a field for dedicated use in dynamic control of waveforms, so that it is possible to reduce the increase in DCI overhead.

Also, the first example is waveform control when a specific resource allocation type (DL RA type 0) is applied. This resource allocation type may be RB/RBG-based bitmap resource allocation.

### (Second Example)

Next, a second embodiment of the present invention will be described below. According to the second example, condition A indicates that a specific bit of DCI is "1" or "0." For example, condition A is fulfilled when a specific bit of DCI is "1."

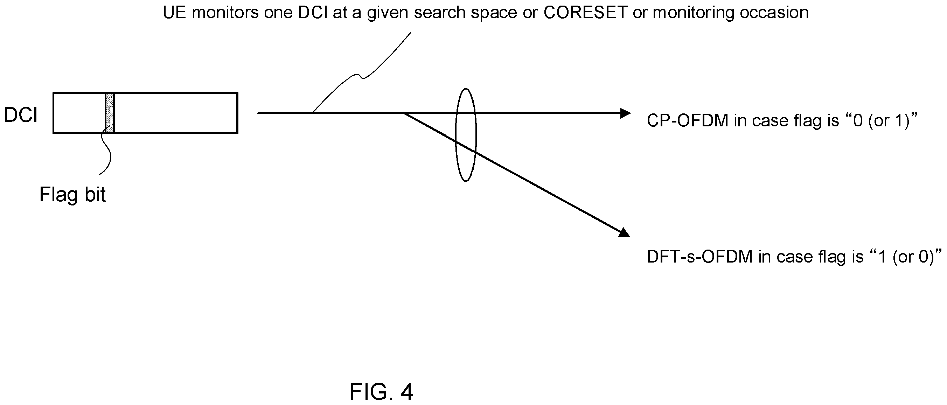

When system information (SIB) reports the DFT-spread OFDM for the PUSCH waveform for message 3, the user terminal 3 transmits message 3 by using the DFT-spread OFDM waveform. After that, the user terminal monitors DCI in a specific search space, radio resource (predetermined field) specified by a predetermined frequency field and a time field configured for the UE, or the paging occasion (PO) (FIG. 4).

The above radio resource (predetermined field) will be referred to as a "control resource set (CORESET)," a "control subband," a "search space set," a "search space resource set," a "control field," a "control subband," an "NR-PDCCH field," and so on. Also, the paging occasion refers to the subframe in which DCI scrambled by a paging indicator (P-RNTI) is transmitted.

As a result of the above monitoring, if the specific bit is "1," the user terminal transmits the PUSCH by using the DFT-spread OFDM waveform. If the specific bit is "0," the user terminal transmits the PUSCH by using the CP-OFDM waveform. In this way, the waveform to apply to PUSCH transmission can be switched based on a specific bit contained in DCI. Note that the linking of the specific bits "1" and "0" may be reversed from the example described above.

As described above, according to the second example, the transmitting waveform for the PUSCH is determined based on a specific bit in DCI. Consequently, the waveform to apply to PUSCH transmission can be controlled dynamically. Also, unlike the first example, resource allocation can be made flexible. For example, the second example can also be applied to cases where type 1 and/or type 2, which are different from resource allocation type 0, are used. That is, desired resource allocation types can be configured or indicated through higher layer signaling.

Note that the field of a specific bit in DCI according to the second example may be omitted if there is no need to switch the PUSCH waveform (for example, when, in the above embodiment, the CP-OFDM waveform is applied to message 3). As a result, it is possible to reduce the radio resources to allocate to DCI, and reduce the overhead.

### (Third Example)

Next, a third embodiment of the present invention will be described below. According to the third example, the type of resource allocation and the waveform to apply to PUSCH transmission are linked in advance. For example, the CP-OFDM waveform may be linked with resource allocation type 0 (condition B), and the DFT-spread OFDM waveform is linked with resource allocation type 2 (condition A).

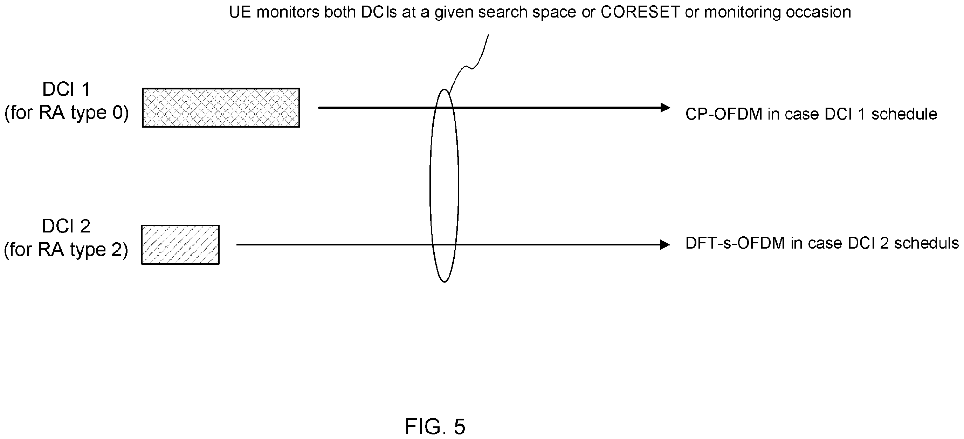

When system information (SIB) reports DFT-spread OFDM for the PUSCH waveform for message 3, a user terminal transmits message 3 by using the DFT-spread OFDM waveform. Afterwards, the user terminal monitors multiple DCIs 1 and 2 (FIG. 5). DCI 1 is the DCI for resource allocation type 0, and DCI 2 is the DCI for resource allocation type 2.

Upon monitoring, as in the second example described above, the user terminal monitors DCI in a specific search space, radio resource (predetermined field) specified by a predetermined frequency field and a time field configured for the UE, or the paging occasion (PO). Note that the overhead of DCI differs between resource allocation type 0 (DCI 1) and resource allocation type 2 (DCI 2).

The user terminal monitors both DCIs, and uses DFT-spread OFDM in PUSCH transmission when the PUSCH is scheduled by DCI 2 (condition A). On the other hand, when the PUSCH is scheduled by DCI 1 (condition B), the user terminal transmits the PUSCH by using the CP-OFDM waveform. Thus, depending on the change of the resource allocation type (that is, depending on which DCI is applied to scheduling), the waveform to apply to PUSCH transmission can be switched.

As described above, according to the third example, the transmitting waveform for the PUSCH is determined depending on what DCI is applied (what resource allocation type is applied) to scheduling. Consequently, the waveform to apply to PUSCH transmission can be controlled dynamically. Also, unlike the first example, flexibility can be given to resource allocation. For example, by configuring separate DCIs for resource allocation type 0, type 1 and type 2 and monitoring these DCIs, the waveform to apply to PUSCH transmission can be controlled in correspondence with types 0 to 2. That is, desired resource allocation types can be configured or indicated using higher layer signaling.

### (Other Examples)

Next, other examples will be described as variations.

### (First Variation)

First, a first variation focuses on scheduling information in the time direction and controls the PUSCH waveform. To be more specific, the first variation controls the PUSCH waveform based on the number of OFDM symbols in the PUSCH.

When the PUSCH is one symbol, the CP-OFDM waveform is always used. This is because, when the PUSCH is one symbol, reference signals and data need to be multiplexed in this symbol and therefore DFT-spread OFDM cannot be used.

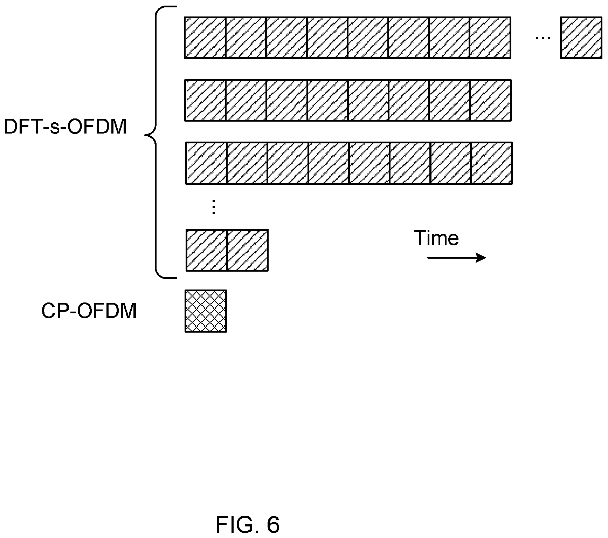

When the PUSCH is not one symbol, the first to third examples that have been described above can be used. Alternatively, as illustrated in FIG. 6, when the PUSCH is not one symbol, the DFT-spread OFDM waveform may be configured or indicated for use.

The number of PUSCH symbols may be indicated by scheduling DCI, may be configured by higher layer signaling, or may be configured or indicated by combining these.

According to the first variation, the PUSCH waveform can be controlled based on the number of symbols of the PUSCH. Furthermore, it is possible to control the PUSCH waveform by combining the first variation with the first to third examples described above, so that, it is possible to configure even more specific conditions for control of the PUSCH waveform. Consequently, when, for example, the CP-OFDM waveform is applied to PUCCH transmission for the purpose of achieving high payload, it is possible to control the waveform to apply to PUSCH transmission based on the communicating environment and/or desired conditions of communication. Consequently, when the CP-OFDM waveform is supported in the UL, in addition to DFT-spread OFDM waveform, user terminals can still control UL transmission adequately.

### (Second Variation)

A second variation sends a report in advance, via higher layer signaling, as to which waveforms are available for use. To be more specific, where the DFT-spread OFDM waveform is the default, subframes to which the CP-OFDM waveform can be applied (a subset of subframes within a radio frame), slots (a subset of slots in the subframe), and/or symbols (a subset of symbols in the slot) are limited.

A subset of subframes, a subset of slots, and/or a subset of symbols may be configured or indicated by higher layer signaling (SIB or RRC).

According to a second variation, radio resources that can be used for the CP-OFDM waveform can be limited, so that it is possible to control the waveform to apply to PUSCH transmission based on the communicating environment and/or desired conditions of communication. Consequently, when the CP-OFDM waveform is supported in the UL, in addition to DFT-spread OFDM waveform, user terminals can still control UL transmission adequately.

### (Third Variation)

A third variation controls the waveform for the PUSCH depending on whether DCI is detected in a UE-specific search space or in a search space that is common between user terminals. To be more specific, when DCI is detected in a search space that is common to one or more user terminals (also referred to as a "common search space" or a "group search space" and the like), a user terminal may determine that the DFT-spread OFDM waveform is the PUSCH waveform (DFT spreading is applied). On the other hand, if DCI is detected in a user terminal-specific search space (UE-specific search space), the user terminal may determine that the CP-OFDM waveform is the PUSCH waveform (DFT spreading is not applied).

According to the third variation, the PUSCH waveform is controlled based on in which search space DCI is detected, so that it is possible to control the waveform to apply to PUSCH transmission based on the communicating environment and/or desired conditions of communication. Consequently, when the CP-OFDM waveform is supported in the UL, in addition to DFT-spread OFDM waveform, user terminals can still control UL transmission adequately.

Now, with the embodiments described above, resource allocation types have been described based on downlink resource allocation, which is supported in LTE. To be more specific, DL RA type 0 (type 0) is RBG-based-bitmap resource allocation, and DL RA type 2 (type 2) is contiguous RB allocation.

Meanwhile, LTE also supports uplink resource allocation, and so uplink resource allocation types can be linked as well. However, in the uplink, UL RA type 0 (type 0) is contiguous RB allocation, and UL RA type 1 (type 1) is non-contiguous RB allocation. So, although type 2 corresponds to contiguous RB allocation in the downlink, type 0 corresponds to contiguous RB allocation in the uplink.

Note that the above resource allocation types may be distinguished as "RB/RBG-based bitmap resource allocation" and "contiguous RB allocation."

Also, DFT-spread OFDM in the above embodiments may include clustered DFT-spread OFDM (Clustered Discrete Fourier Transform-Spread-Orthogonal Frequency Division Multiplexing).

Also, as for the indicators of user terminals, for example, C-RNTIs (Cell-Radio Network Temporary Identifiers) may be used in RRC-connected mode, or higher layer UE-IDs such as S-TMSIs (System Architecture Evolution-Temporary Mobile Subscriber Identities) and the like may be used in idle mode.

### (Radio Communication System)

Now, the structure of a radio communication system according to the present embodiment will be described below. In this radio communication system, each radio communication method according to the above-described embodiments is employed. Note that the radio communication methods according to the herein-contained examples of the present invention may be applied individually, or may be combined and applied.

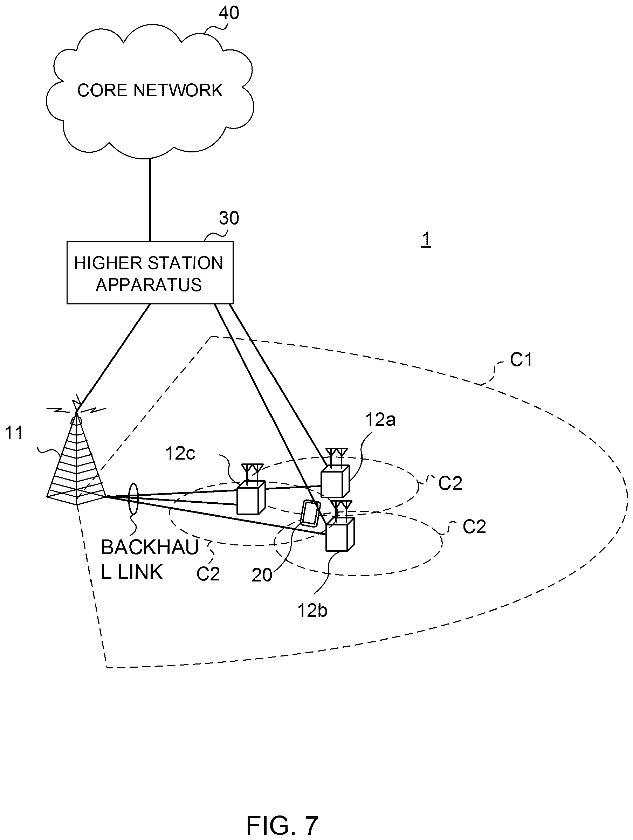

FIG. 7 is a diagram to illustrate an example of a schematic structure of a radio communication system according to present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A structure in which different numerologies are applied between cells may be adopted. Note that a "numerology" refers to a set of communication parameters that characterize the design of signals in a given RAT and/or the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use license band CCs and unlicensed band CCs as a plurality of cells.

Furthermore, the user terminal 20 can perform communication using time division duplexing (TDD) or frequency division duplexing (FDD) in each cell. A TDD cell and an FDD cell may be referred to as a "TDD carrier (frame configuration type 2)," and an "FDD carrier (frame configuration type 1)," respectively.

Also, in each cell (carrier), either subframes having a relatively long time duration (for example, 1 ms) (also referred to as "TTIs," "normal TTIs," "long TTIs," "normal subframes," "long subframes," "slots," and/or the like), or subframes having a relatively short time duration (also referred to as "short TTIs," "short subframes," "slots" and/or the like) may be applied, or both long subframes and short subframe may be used. Furthermore, in each cell, subframes of two or more time lengths may be used.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, optical fiber in compliance with the CPRI (Common Public Radio Interface), the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmission/reception point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmission/reception points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform inter-terminal (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or contiguous resource blocks per terminal, and allowing a plurality of terminals to use mutually different bands. Note that the uplink and downlink radio access schemes are not limited to the combinations of these, and OFDMA may be used in UL. Also, SC-FDMA can be applied to a side link (SL) that is used in inter-terminal communication.

In the radio communication system 1, a DL data channel (PDSCH (Physical Downlink Shared CHannel), also referred to as a DL shared channel and/or the like), which is used by each user terminal 20 on a shared basis, a broadcast channel (PBCH (Physical Broadcast CHannel)), L1/L2 control channels and so on are used as DL channels. At least one of user data, higher layer control information and SIBs (System Information Blocks) is communicated using the PDSCH. Also, the MIB (Master Information Block) is communicated using the PBCH.

The L1/L2 control channels include DL control channels (PDCCH (Physical Downlink Control CHannel), EPDCCH (Enhanced Physical Downlink Control CHannel), etc.)), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH and/or the EPDCCH. The number of OFDM symbols to use for the PDCCH is communicated by the PCFICH. The EPDCCH is frequency-division-multiplexed with the PDSCH and used to communicate DCI and so on, like the PDCCH. PUSCH delivery acknowledgment information (A/N, HARQ-ACK, etc.) can be communicated by using at least one of the PHICH, the PDCCH and the EPDCCH.

In the radio communication system 1, a UL data channel (PUSCH (Physical Uplink Shared CHannel), also referred to as a UL shared channel and/or the like), which is used by each user terminal 20 on a shared basis, an UL control channel (PUCCH (Physical Uplink Control CHannel)), a random access channel (PRACH (Physical Random Access CHannel)) and so on are used as UL channels. User data, higher layer control information and so on are communicated by using the PUSCH. Uplink control information (UCI), including at least one of PDSCH delivery acknowledgement information (A/N, HARQ-ACK, etc.), channel state information (CSI) and so on is communicated by using the PUSCH or the PUCCH. By means of the PRACH, random access preambles for establishing connections with cells are communicated.

### <Radio Base Station>

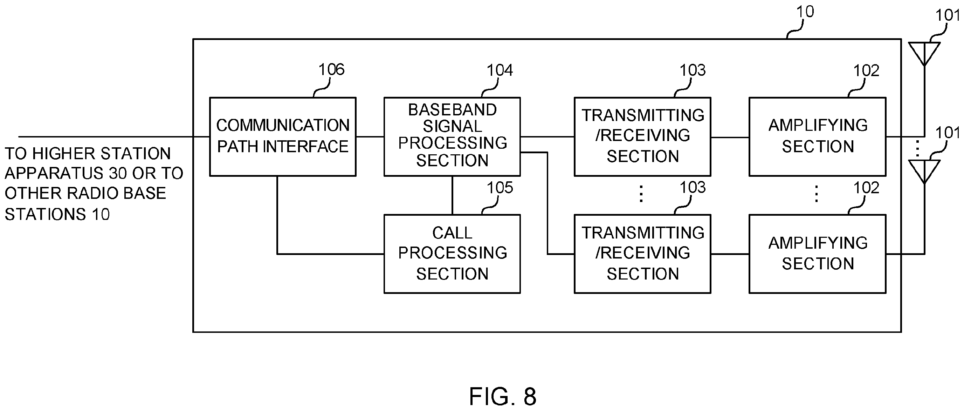

FIG. 8 is a diagram to illustrate an example of an overall structure of a radio base station according to present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) process), scheduling, transport format selection, channel coding, rate matching, scrambling, an inverse fast Fourier transform (IFFT) process and a precoding process, and the result is forwarded to each transmitting/receiving sections 103. Furthermore, downlink control signals are also subjected to transmission processes such as channel coding and an inverse fast Fourier transform, and forwarded to the transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 at least performs call processing such as setting up and releasing communication channels, manages the state of the radio base station 10 or manages the radio resources.

The communication path interface section 106 transmits and receives signals to and from the higher station apparatus 30 via a predetermined interface. Also, the communication path interface 106 may transmit and/or receive signals (backhaul signaling) with neighboring radio base stations 10 via an inter-base station interface (for example, an interface in compliance with the CPRI (Common Public Radio Interface), such as optical fiber, the X2 interface, etc.).

In addition, the transmitting/receiving sections 103 transmit DL signals (for example, at least one of DCI (DL assignment for scheduling DL data and/or UL grant for scheduling UL data), DL data, and DL reference signals) and receive UL signals (for example, at least one of UL data, UCI, and UL reference signals).

Also, in random access procedures, the transmitting/receiving sections 103 indicate the waveform to use for message 3 by a random access response. In addition, the transmitting/receiving sections 103 indicate the waveform to use for the PUSCH using downlink control information that is transmitted after message 3.

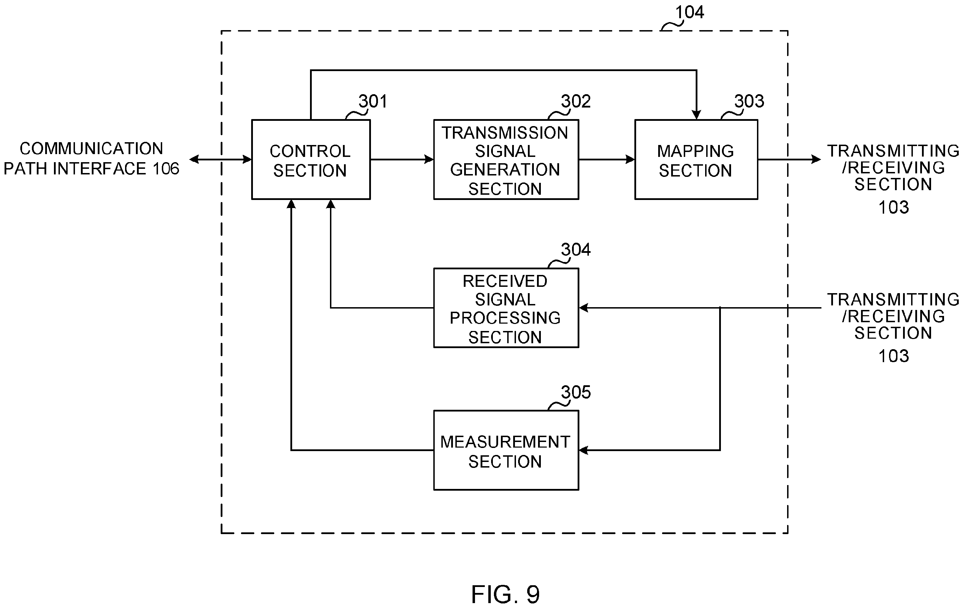

FIG. 9 is a diagram to illustrate an exemplary functional structure of a radio base station according to present embodiment. Note that, although this example will primarily illustrate functional blocks that pertain to characteristic parts of the present embodiment, the radio base station 10 has other functional blocks that are necessary for radio communication as well. As illustrated in FIG. 9, the baseband signal processing section 104 at least has a control section 301, a transmission signal generation section 302, a mapping section 303, a received signal processing section 304 and a measurement section 305.

The control section 301 controls the whole of the radio base station 10. The control section 301 controls, for example, at least one of generation of DL signals in the transmission signal generation section 302, mapping of DL signals in the mapping section 303, UL signal receiving processes (for example, demodulation) in the received signal processing section 304, and measurements in the measurement section 305.

The control section 301 schedules user terminals 20. In random access procedures, the control section 301 may control the transmitting/receiving sections 103 to indicate the waveform to use for message 3 by a random access response. The control section 301 may control the transmitting/receiving sections 103 to indicate the waveform to use for the PUSCH by using downlink control information that is transmitted after message 3. To be more specific, when scheduling is performed based on a predetermined resource allocation type, the control section 301 may control whether not to allocate contiguous resources.

In addition, the control section 301 may control specific bits included in downlink control information to control the waveform which the user terminal uses for the uplink shared channel. Also, the waveform to use for the uplink shared channel may be controlled based on the resource allocation type that is applied to downlink control information.

The control section 301 can be constituted by a controller, a control circuit or control apparatus that can be described based on general understanding of the technical field to which the present invention pertains.

The transmission signal generation section 302 generates DL signals (including DL data signals, DL control signals, DL reference signals and so on) based on commands from the control section 301, and outputs these signals to the mapping section 303.

The transmission signal generation section 302 can be constituted by a signal generator, a signal generation circuit or signal generation apparatus that can be described based on general understanding of the technical field to which the present invention pertains.

The mapping section 303 maps the DL signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding, etc.) of UL signals transmitted from the user terminals 20 (including, for example, a UL data signal, a UL control signal, a UL reference signal, etc.). To be more specific, the received signal processing section 304 may output the received signals, the signals after the receiving processes and so on, to the measurement section 305. In addition, the received signal processing section 304 performs UCI receiving processes based on UL control channel configuration commanded from the control section 301.

The measurement section 305 conducts measurements with respect to the received signals. The measurement section 305 can be constituted by a measurer, a measurement circuit or measurement apparatus that can be described based on general understanding of the technical field to which the present invention pertains.

Also, the measurement section 305 may measure the channel quality in UL based on, for example, the received power (for example, RSRP (Reference Signal Received Power)) and/or the received quality (for example, RSRQ (Reference Signal Received Quality)) of UL reference signals. The measurement results may be output to the control section 301.

### (User Terminal)

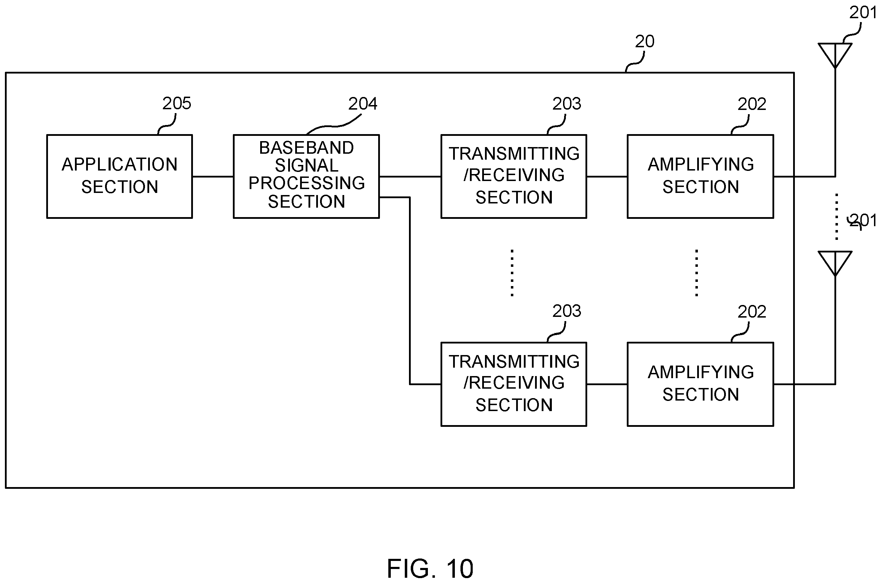

FIG. 10 is a diagram to illustrate an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the DL signals amplified in the amplifying sections 202. The received signals are subjected to frequency conversion and converted into the baseband signal in the transmitting/receiving sections 203, and output to the baseband signal processing section 204.

The baseband signal processing section 204 performs, for the baseband signal that is input, at least one of an FFT process, error correction decoding, a retransmission control receiving process and so on. The DL data is forwarded to the application section 205. The application section 205 performs processes related to higher layers above the physical layer and the MAC layer, and so on.

Meanwhile, UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (including, for example, at least one of an A/N in response to a DL signal, channel state information (CSI) and a scheduling request (SR), and/or others) is also subjected to at least one of channel coding, rate matching, puncturing, a DFT process, an IFFT process and so on, and the result is forwarded to the transmitting/receiving sections 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

In addition, the transmitting/receiving section sections 203 receive DL signals (for example, at least one of DCI (DL assignment and/or UL grant), DL data and DL reference signals) and transmit UL signals (for example, at least one of UL data, UCI, and UL reference signals).

Furthermore, in the random access procedures, the transmitting/receiving sections 203 also receive a random access response to control the waveform to use for message 3. In addition, the transmitting/receiving sections 203 receive downlink control information that is transmitted after message 3, and controls the waveform to use for the PUSCH.

For the transmitting/receiving sections 203 can be constituted by transmitters/receivers, transmitting/receiving circuits or transmitting/receiving apparatus that can be described based on general understanding of the technical field to which the present invention pertains. Furthermore, a transmitting/receiving section 203 may be structured as one transmitting/receiving section, or may be formed with a transmitting section and a receiving section.

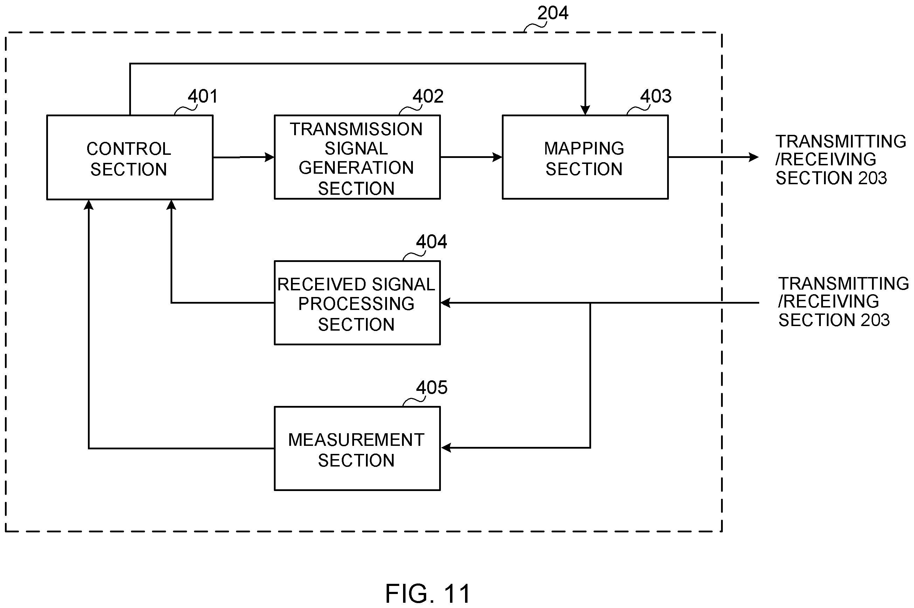

FIG. 11 is a diagram to illustrate an exemplary functional structure of a user terminal according to present embodiment. Note that, although FIG. 15 primarily illustrates functional blocks that pertain to characteristic parts of the present embodiment, the user terminal 20 has other functional blocks that are necessary for radio communication as well. As illustrated in FIG. 11, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, at least one of generation of UL signals in the transmission signal generation section 402, mapping of UL signals in the mapping section 403, DL signal the receiving processes in the received signal processing section 404 and measurements in the measurement section 405.

The control section 401 controls, based on the waveform that is used for an uplink shared channel, scheduled by downlink control information scrambled by a first indicator, the waveform to use for the uplink shared channel, scheduled by downlink control information scrambled by a second indicator.

If a predetermined resource allocation type is indicated, the control section 401 may control, based on whether or not contiguous resources are allocated in the uplink shared channel that is scheduled by using the downlink control information scrambled by the second indicator, the waveform to use for the uplink shared channel that is scheduled by using the downlink control information scrambled by the second indicator (first example).

The control section 401 may control, based on a specific bit included in the downlink control information scrambled by the second indicator, the waveform to use for the uplink shared channel that is scheduled by using the downlink control information scrambled by the second indicator (second example).

The control section 401 may control the waveform to use for the uplink shared channel that is scheduled by using the downlink control information scrambled by the second indicator based on the type of resource allocation applied to the downlink control information scrambled by the second indicator (third example).

In any example of waveform control, the control section 401 can select whether or not to use DFT spreading to transmit the uplink shared channel scheduled by using the downlink control information scrambled by the second indicator.

The control section 401 can be constituted by a controller, a control circuit or control apparatus that can be described based on general understanding of the technical field to which the present invention pertains.

In the transmission signal generation section 402, UL signals (including UL data signals, UL control signals, UL reference signals, UCI, etc.) are generated (including, for example, encoding, rate matching, puncturing, modulation, etc.) based on commands from the control section 401, and output to the mapping section 403. The transmission signal generation section 402 can be constituted by a signal generator, a signal generation circuit or signal generation apparatus that can be described based on general understanding of the technical field to which the present invention pertains.

The mapping section 403 maps the UL signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding, etc.) of DL signals (including DL data signals, scheduling information, DL control signals, DL reference signals, etc.). The received signal processing section 404 outputs the information received from the radio base station 10, to the control section 401. The received signal processing section 404 outputs, for example, broadcast information, system information, high layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that the channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiments illustrate blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

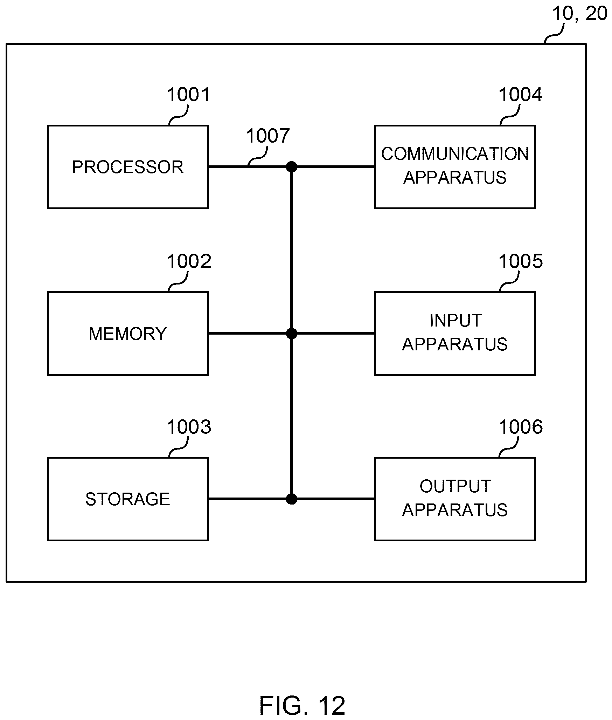

For example, the radio base station, user terminals and so on according to embodiments of the present invention may function as a computer that executes the processes of the radio communication method of the present invention. FIG. 12 is a diagram to illustrate an example hardware structure of a radio base station and a user terminal according to present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus illustrated in the drawings, or may be designed not to include part of the apparatus.

For example, although only one processor 1001 is illustrated, a plurality of processors may be provided. Furthermore, processes may be implemented with one processor, or processes may be implemented in sequence, or in different manners, on one or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single-carrier Frequency Division Multiple Access) symbols, and so on). Also, a slot may be a time unit based on numerology. Also, a slot may include a plurality of minislots. Each minislot may be comprised of one or more symbols in the time domain. Also, a minislot may be referred to as a "sub-slot."

A radio frame, a subframe, a slot, a minislot and a symbol all represent the time unit in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot or mini-slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," "a partial TTI (or a "fractional TTI"), a "shortened subframe," a "short subframe," a "mini-slot," "a sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, minislots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented using other applicable information. For example, a radio resource may be specified by a predetermined index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may also be referred to as, for example, a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side. For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication systems and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access."

As used herein, when two elements are connected, these elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical (both visible and invisible) regions.

In the present specification, the phrase "A and B are different" may mean "A and B are different from each other." The terms such as "leave" "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a transmission section that transmit an uplink shared channel (PUSCH); and
a control section that controls, based on a waveform that is used for an uplink shared channel scheduled by downlink control information scrambled by a first indicator, a waveform to use for an uplink shared channel that is scheduled by downlink control information scrambled by a second indicator.

2. The user terminal according to claim 1, wherein, when a predetermined resource allocation type is indicated, the control section controls, based on whether or not contiguous resources are allocated in the uplink shared channel scheduled by using the downlink control information scrambled by the second indicator, the waveform to use for the uplink shared channel that is scheduled by using the downlink control information scrambled by the second indicator.

3. The user terminal according to claim 1, wherein the control section controls, based on a specific bit included in the downlink control information scrambled by the second indicator, the waveform to use for the uplink shared channel that is scheduled by using the downlink control information scrambled by the second indicator.

4. The user terminal according to claim 1, wherein the control section controls, based on the type of resource allocation applied to the downlink control information scrambled by the second indicator, the waveform to use for the uplink shared channel that is scheduled by using the downlink control information scrambled by the second indicator.

5. The user terminal according to one of claim 1 to claim 4,
wherein the control section determines whether or not to use DFT spreading to transmit the uplink shared channel that is scheduled by using the downlink control information scrambled by the second indicator, and controls the waveform.

6. A radio communication method for a user terminal, comprising the steps of:
transmitting an uplink shared channel (PUSCH); and
controlling, based on a waveform that is used for an uplink shared channel scheduled by downlink control information scrambled by a first indicator, a waveform to use for an uplink shared channel that is scheduled by downlink control information scrambled by a second indicator.
